# EUROPEAN PATENT APPLICATION

(11) **EP 1 605 194 A1**
(43) Date of publication of application: **14.12.2005**
(21) Application number: 05010553.5
(22) Date of filing: 14.05.2005
(51) Int. Cl.: F16L 9/04, F16L 9/16

(54) **Multiple walled rolled tube and method for manufacturing same**

(30) Priority: 08.06.2004 DE 102004028020
(71) Applicant: ITT MANUFACTURING ENTERPRISES, INC., Wilmington, Delaware 19801 (US)
(72) Inventor: Stahn, Andreas Bernd, 69231 Rauenberg (DE); Carman, Anthony, 69115 Heidelberg (DE); Krause, Randy, MI 48428 Dryden (US); Campagna, Guido M., MI 48334 Farmington Hills (US)
(74) Representative: Dreiss, Fuhlendorf, Steimle & Becker

(57) **Abstract**

The invention relates to a multiple walled tube rolled from a metal strip for transporting fluids, specifically in automobile engineering, where the metal strip consists of stainless steel. The invention further relates to a method for manufacturing such a tube, where the stainless steel strip is brazed in an H₂ atmosphere after rolling, specifically by the addition of a brazing solder.

## Description

The invention relates to a multiple walled tube rolled from a metal strip for transporting fluids. The invention further relates to a method for manufacturing a multiple walled rolled tube.

It is known to manufacture multiple walled rolled tubes from black plate, where the steel strip has a copper or bronze coating which acts as a solder. The metal strip is galvanized after rolling and brazing and furnished with an adhesion promoter onto which a plastic coating is applied as a protective layer. A tube of this type is used, for example, as a hydraulic line on a vehicle to transport hydraulic media, for example, brake fluid. These tubes are complicated to manufacture since they still have to be protected against the effects of the environment and mechanical influences. For this reason they are galvanized and surrounded with a plastic sheath.

The object of the invention is then to provide a multiple walled rolled tube which is simpler to manufacture.

This object is accomplished in accordance with the invention in a multiple walled rolled tube of the type named initially in which the metal strip consists of stainless steel.

A steel strip of stainless steel is resistant to the effects of the environment, in particular to corrosion and perforation, and therefore does not require protection thereagainst. Furthermore, the tube in accordance with the invention is resistant, or insensitive, to mechanical influences since damage to the surface does not result directly in corrosion of the metal strip. It is therefore possible, for example, to dispense with a zinc coat and a plastic sheath so that an adhesion promoter coat also becomes superfluous.

In a preferred embodiment, the stainless steel strip has a plating, where the plating is specifically applied on both sides. The two plating coats may have the same or different dimensions and/or contain compounds. The plating coats serve to join the rolled stainless steel strip at its abutting sides, which is advantageously accomplished by brazing. To do this, the plating is a brazing solder and advantageously contains a nickel alloy. Tubes of this kind, which can also be easily chrome plated, are extremely resistant to corrosion and mechanical load.

The stainless steel strip is advantageously rolled to form a double wall. The stainless steel strip may be rolled in a helix and then it has a helical seam, or the stainless steel strip may also be rolled in the transverse direction, when it then has a longitudinal seam.

An almost stepless transition in the area of the seam is achieved by the stainless steel strip having longitudinal edges which taper to a wedge shape. This can be implemented on the inside and/or on the outside.

The object stated initially is achieved in accordance with the invention with a process in which the stainless steel strip is brazed in an H₂ atmosphere after rolling, in particular by adding a brazing solder. The H₂ atmosphere prevents the stainless steel strip from tarnishing, where the brazing solder is added before or after rolling. Preferably the brazing solder, specifically in the form of nickel or a nickel alloy which is specifically phosphated or boronized, is already on the surface, specifically on both sides of the stainless steel strip.

The completed tube can be undergo further processing immediately after brazing or be wound into a coil.

The stainless steel strip is preferably rolled in the transverse direction and is specifically of double-wall construction. Endless tubes or tubes of specified lengths, which are extremely resistant, can be manufactured simply.

Additional advantages, features and details of the invention are found in the dependent claims and the following description in which a particularly preferred embodiment is described in detail with reference to the drawing. The features shown in the drawing and those mentioned in the description and the claims can be essential to the invention either individually or in any given combination.

In the drawing
Figure 1 shows a side elevation of a stainless steel strip;
Figure 2 shows a cross-section through a double-walled rolled tube; and
Figure 3 shows a perspective view of a section of a double-walled rolled tube.

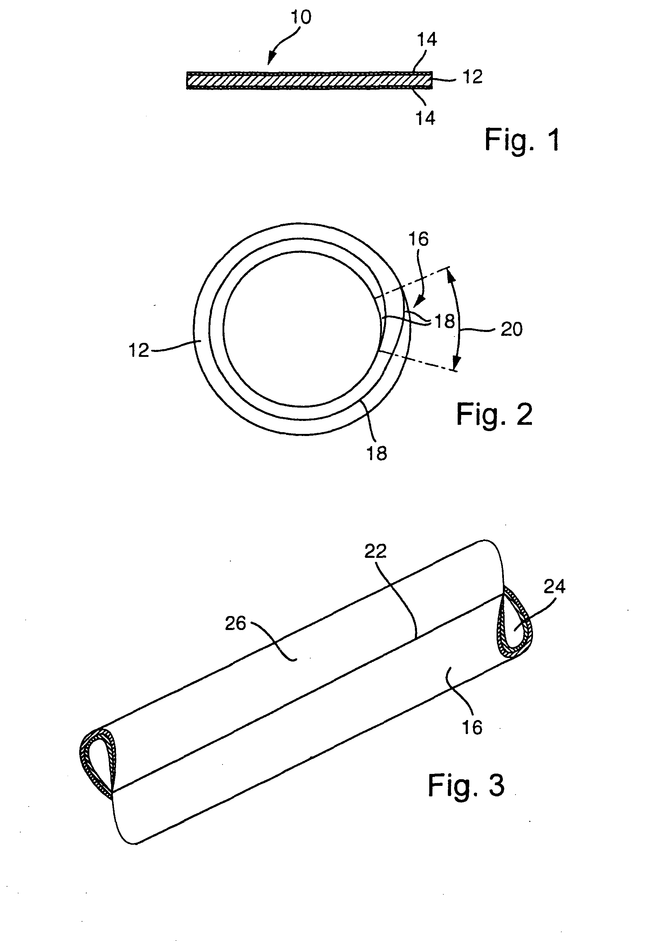

Figure 1 represents a stainless steel strip identified by the reference sign 10 which possesses a center layer of stainless steel 12 provided with a plating 14 on its upper side and on its lower side. This stainless steel strip 10 is rolled to form a double wall so that a tube 16 is created. The reference sign 18 identifies a brazing seam in which the two plating coats 14 lie against each other. The sections of the plating coats 14 not attached to each other form the inner surface and outer surface of the tube 16, where, viewed over the entire circumference, two layers of the stainless steel 12 are wound. This is achieved by the longitudinal edges 18 tapering to a wedge and overlapping in area 20 in such a way that together they form the thickness of a stainless steel layer.

Figure 3 shows a section of the tube 16 where the line of the brazed seam 22 is clearly recognizable. Both the inner surface 24 and the outer surface 26 are formed by the plating 14 which contains nickel, making the tube 16 resistant to the effects of the environment.

## Claims

1. Multiple walled tube rolled from a metal strip (16) for transporting fluids, in particular in automobile engineering, **characterized in that** the metal strip (16) consists of stainless steel.

2. Tube as claimed in claim 1, wherein the stainless steel strip (10) carries a plating (14).

3. Tube as claimed in one of the preceding claims, wherein the stainless steel strip (10) carries a plating (14) on both sides.

4. Tube as claimed in claim 3, wherein the two plated layers (14) are identical in their dimensions and/or compositions.

5. Tube as claimed in one of the claims 2 to 4, wherein the plating (14) is a brazing solder.

6. Tube as claimed in one of the claims 2 to 5, wherein the plating (14) contains a nickel alloy which in particular is phosphated or boronized.

7. Tube as claimed in one of the claims 2 to 6, wherein the plating contains bronze.

8. Tube as claimed in one of the preceding claims, wherein the stainless steel strip (10) is rolled to form a double wall.

9. Tube as claimed in one of the preceding claims, wherein the stainless steel strip (10) is rolled in a helix and has a helical seam.

10. Tube as claimed in one of the claims 1 to 8, wherein the stainless steel strip in rolled in the transverse direction and has a longitudinal seam.

11. Tube as claimed in one of the preceding claims, wherein the stainless steel strip (10) has longitudinal edges (18) which taper to a wedge shape.

12. Method of manufacturing a multiple walled tube rolled from a stainless steel strip (10) as claimed in one of the preceding claims, **characterized in that** the stainless steel strip (10) is brazed in an H₂ atmosphere after rolling, specifically by adding a brazing solder.

13. Method as claimed in claim 12, wherein the brazing takes place in a continuous oven or by induction.

14. Method as claimed in claim 12 or 13, wherein the stainless steel strip (10) is rolled in the transverse direction or in a helix.
